# EUROPÄISCHE PATENTSCHRIFT

(11) **EP 2 737 828 B1**
(45) Veröffentlichungstag und Bekanntmachung des Hinweises auf die Patenterteilung: **15.08.2018**
(21) Anmeldenummer: 12194817.8
(22) Anmeldetag: 29.11.2012
(51) Int. Cl.: A47B 88/40, F16C 29/00, F16C 29/04

(54) **Auszugführung für Sanitärmodul und Sanitärmodul mit Auszugführung**
Guide for for sanitary furniture and sanitary furniture with a pull-out guide
Guide pour meuble sanitaire et meuble sanitaire avec un guide

(43) Veröffentlichungstag der Anmeldung: 04.06.2014
(73) Patentinhaber: Geberit International AG, 8645 Jona (CH)
(72) Erfinder: Trecco, Alessandro, 8713 Uerikon (CH); Schintler, Michael, 8330 Pfäffikon (CH)
(74) Vertreter: Frischknecht, Harry Ralph

(56) Entgegenhaltungen:
- EP-A2- 0 579 135
- FR-A- 1 529 880
- US-A- 4 285 560

## Beschreibung

### TECHNISCHES GEBIET

Die vorliegende Erfindung betrifft eine Auszugführung zur beweglichen Lagerung eines Auszugselementes, beispielsweise einer Schublade, entlang einer Längsrichtung in einer feststehenden Trägerstruktur eines Sanitärmoduls, nach dem Oberbegriff von Anspruch 1 und ein Sanitärmodul mit einem Auszugselement und einer Auszugführung nach dem Oberbegriff von Anspruch 10.

### STAND DER TECHNIK

Aus dem Stand der Technik sind Auszugführungen an Schränken bekannt. An derartigen Auszugführungen werden Schubladen gelagert und sind dabei relativ zum Schrank verschiebbar. Der Einsatz von solchen Schränken hat sich nicht nur in der Küche, sondern auch in Badezimmern bewährt. Der Benutzer kann dabei seine Utensilien einfach und diskret in einer Schublade versorgen.

Beispielsweise offenbart die EP 2 220 983 einen Schrank, der als Waschtisch ausgebildet ist. Eine Schublade kann seitlich aus dem Waschtisch herausgezogen werden und ist dann von vorne her einfach zugänglich. Die Schublade ist über ein Führungssystem ausrichtbar. Das Führungssystem umfasst im Wesentlichen zwei vertikale Linearführungen, welche in der Vertikalen liegen und ein verhältnismässig grosse Länge aufweisen. Durch die grosse Länge könne zwar gute Führungseigenschaften bereitgestellt werden, es wird allerdings der Einbauraum vergrössert.

Aus dem Stand der Technik ergeht weiter der Nachteil, dass gerade bei raumhohen Auszügen die Auszugführungen eine Schwachstelle darstellen. Es kann bei voller Beladung zu einem Abkippen der Schublade in ausgezogenem Zustand kommen, wobei dann die Schublade nur schwer zu bewegen ist.

Die FR 1 529 880 offenbart eine Schubladenanordnung mit mehreren Führungsschienen.

Allerdings weist die FR 1 529 880 den Nachteil auf, dass die technische Lehre nicht in engräumigen Platzverhältnissen einsetzbar ist.

### DARSTELLUNG DER ERFINDUNG

Ausgehend von diesem Stand der Technik liegt der Erfindung eine Aufgabe zugrunde, eine Auszugführung zu schaffen, welche die Nachteile des Standes der Technik überwindet. Insbesondere soll die Auszugführung bei gleichbleibender oder gar besseren Führungseigenschaften und Belastungseigenschaften kompakter sein.

Diese Aufgabe löst die Auszugführung nach dem Gegenstand von Anspruch 1. Demgemäss umfasst eine Auszugführung zur beweglichen Lagerung eines Auszugselementes entlang einer Längsrichtung in einer feststehenden Trägerstruktur eines Sanitärmoduls einen Führungssupport, der mit der Trägerstruktur verbindbar ist, und einen Montagesupport, der mit dem Führungssupport bezüglich des Führungsupports ausrichtbar in Verbindung steht. Der Montagesupport ist mit dem Auszugselement des Sanitärmoduls verbindbar. Der Führungssupport umfasst weiter eine erste vertikale Linearführung, eine zweite vertikale Linearführung und eine horizontale Linearführung, über welche Linearführungen die Auszugführung an der Trägerstruktur befestigbar ist.

Durch die Anordnung von zwei Führungen in der Vertikalen, welche durch die Gewichtskraft der Auszugführung belastet werden, kann ein besonders kompaktes Führungselement bereitgestellt werden. Weiter wird durch die in der Horizontalen liegenden Führung die Führung des Auszugselementes zusätzlich verbessert.

Die erste vertikale Linearführung ist länger als die zweite vertikale Linearführung. Folglich wird die erste vertikale Linearführung nicht auf die volle Länge ausgezogen, was den Vorteil hat, dass diese eine grössere Last aufnehmen kann. Zudem kann durch die kürzere Linearführung der maximale Auszug definiert werden. Durch die Anordnung von unterschiedlich langen Vertikalführung ergibt sich der Vorteil, dass beim Einsatz von mehreren Auszugführungen in einem Sanitärmodul die Baugrösse des Sanitärmoduls durch geschickte Anordnung der ersten Vertikalführungen untereinander limitiert werden kann, wobei gleichzeitig die Tragkraft des Auszugselementes erhöht
werden kann.

Besonders bevorzugt liegen die beiden vertikalen Linearführungen in der gleichen Ebene oder in parallelen Ebenen, wobei diese besagte Ebene bzw. die besagten Ebenen im Einbauzustand in der Vertikalen liegt/liegen. Die horizontale Linearführung liegt in einer Ebene, welche senkrecht zur Ebene der vertikalen Linearführungen liegt. Diese Ebene ist in Einbaulage die Horizontale.

Vorzugsweise weisen die vertikalen Linearführungen und die horizontale Linearführung die Form von Längsführungen mit jeweils zwei Führungsschienen, die über Wälzelemente, wie Kugelpakete, bewegbar zueinander angeordnet sind, auf. Jeweils eine der Führungsschienen ist mit der Trägerstruktur verbindbar und jeweils die andere der Führungsschienen mit dem Führungssupport in Verbindung steht. Die Verbindung mit der Trägerstruktur kann direkt oder indirekt sein.

Bevorzugterweise umfasst der Führungssupport eine Grundplatte, von welcher ein Schenkel rechtwinklig weg steht, wobei an der Grundplatte die beiden vertikalen Linearführungen angeordnet sind, und wobei am Schenkel die Horizontalführung angeordnet ist, wobei die Grundplatte in Einbaulage in der Vertikalen liegt und wobei der Schenkel in Einbaulage in der Horizontalen liegt.

Vorzugsweise umfasst der Montagesupport eine Grundplatte, von welcher mindestens ein Montageschenkel winklig, vorzugsweise rechtwinklig, absteht. Die Grundplatte liegt flächig an der Grundplatte des Führungssupports an und steht vorzugsweise über eine Schraubverbindung mit dem Führungssupport in Verbindung.

Vorzugsweise ist der Montagesupport zum Führungssupport in seiner Lage über mindestens ein Ausrichtelement ausrichtbar. Somit kann der Installateur vor Ort die Lage des Auszugselementes bezüglich des Sanitärmoduls bzw. der Tragstruktur durch Ausrichten des Montagesupportes zum Führungssupport einstellen.

In einer besonders bevorzugten Ausführungsform umfasst das Ausrichtelement mindestens eine Ausrichtkante am Montagesupport und ein am Führungssupport verschwenkbar gelagertes Exzenterelement, wobei das Exzenterelement mit den Ausrichtkanten in Kontakt steht und eine Ausrichtbewegung auf den Montagesupport ausübt.

Die Ausrichtelemente sind vorzugsweise so angeordnet, dass das Auszugselement in alle verschiedenen Richtungen ausrichtbar ist. Hierzu sind vorzugsweise drei verschiedene Ausrichtelemente vorgesehen.

In einer bevorzugten Ausführungsform stehen die erste vertikale Linearführung, die zweite vertikale Linearführung und die horizontale Linearführung mit einem Lagerungselement miteinander in Verbindung. Über dieses Lagerungselement lässt sich die Auszugführung einfach mit der Tragstruktur verbinden. Besonders bevorzugt weist das Lagerungselement die Gestalt einer Lagerungsplatte mit angeformten und winklig von der Lagerungsplatte abstehenden Schenkeln auf, wobei die Auszugführung über die Lagerungsplatte mit der Trägerstruktur verbindbar ist.

Ein Sanitärmodul, insbesondere für die Befestigung eines Sanitärartikels, umfasst eine aus Profilen bereitgestellte Trägerstruktur und flächige mit den Profilen in Verbindung stehende Dekorelemente, welche die Trägerstruktur mindestens frontseitig und oberseitig überdecken. Das Sanitärmodul umfasst weiterhin mindestens ein Auszugselement, welches mit einer Auszugführung nach obiger Beschreibung mit der Trägerstruktur in Verbindung steht und relativ zur Trägerstruktur verschiebbar ist.

Der Führungssupport ist vorzugsweise über die vertikalen Linearführungen und die horizontale Linearführung an der Trägerstruktur direkt oder indirekt befestigt und das Auszugselement ist mit dem Montagesupport an der Auszugführung gelagert.

In einer besonders bevorzugten Ausführungsform ist das Sanitärmodul zusätzlich zur Auszugführung über eine weitere horizontale Führung zur Trägerstruktur gelagert.

Vorzugsweise sind bezüglich einer mittig durch das Sanitärmodul verlaufenden Vertikalebene zwei Auszugselemente angeordnet, welche entlang einer rechtwinklig zur Vertikalebene stehenden und in der Horizontalen verlaufenden Achse bewegbar sind. Jeweils die ersten vertikalen Linearführungen der Auszugführungen sind in der Höhe zueinander versetzt sind und durchdringen die Vertikalebene. Die eine Linearführung durchdringt also die Vertikalebene von der einen Seite und die andere Linearführung durchdringt die Vertikalebene von der anderen Seite. Hierdurch kann der Innenraum im Sanitärmodul besonders effizient ausgenutzt werden, wobei immer noch die Vorteile der Belastung und Führungslänge vorhanden sind.

Vorzugsweise weist die Trägerstruktur weiter Befestigungsstellen zur Befestigung des Sanitärartikels am Sanitärmodul mittels zu den Befestigungsstellen passenden Befestigungsmitteln auf. Auch kann die Trägerstruktur Durchbrüche oder Kanäle zur Durchführung von Rohrleitungen zum Anschluss an die Sanitärarmatur aufweisen, wobei die Dekorelemente Durchbrüche zur Durchführung der Befestigungsmittel oder der Rohrleitungen aufweisen bzw. bereitstellen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Sanitärmoduls für die Aufnahme eines Sanitärartikels, wobei die Sanitärarmatur Auszugselemente umfasst;
- Fig. 2: die Ansicht nach Figur 1 ohne Dekorelement und mit einem ausgezogenem Auszugselement;
- Fig. 3: eine perspektivische Ansicht einer Auszugführung für die Führung und Lagerung eines Auszugselementes beispielsweise in eines Sanitärmoduls nach Figur 1;

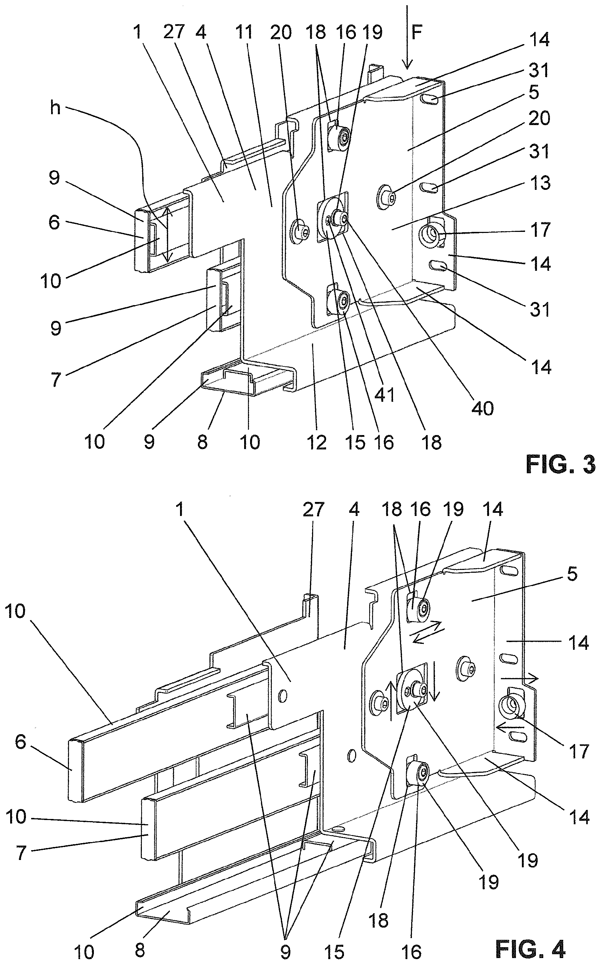

- Fig. 3: die Auszugführung nach Figur 3 im ausgezogenen Zustand;

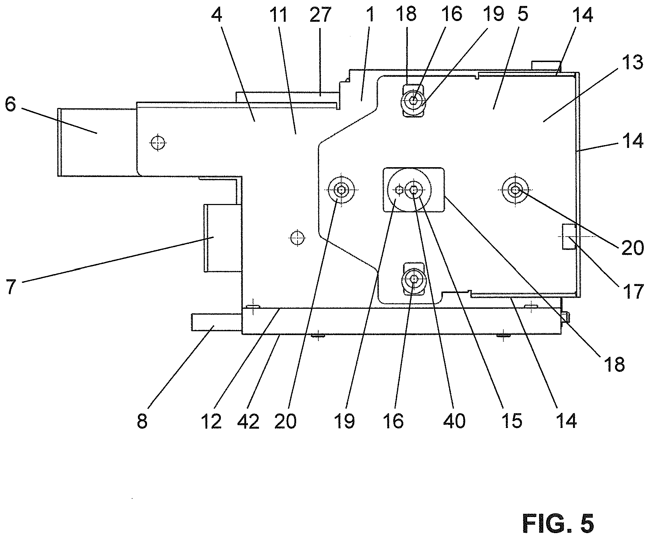

- Fig. 5: eine Frontansicht der Figur 3;

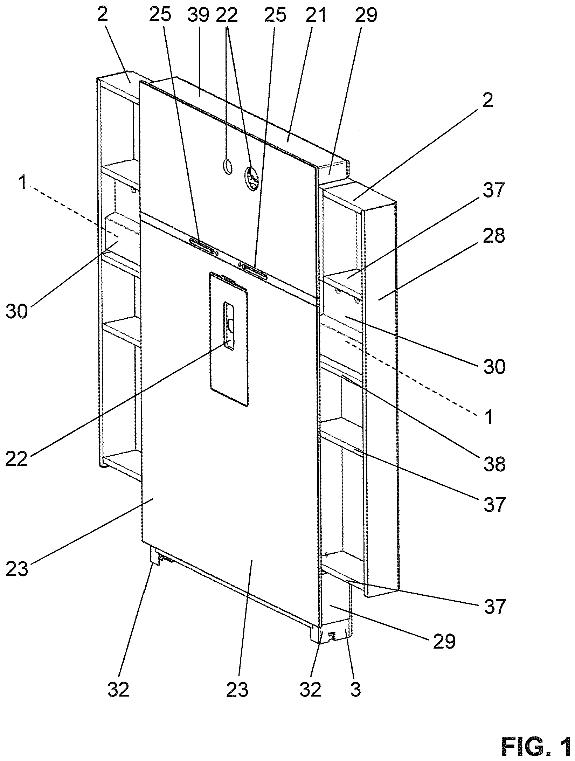

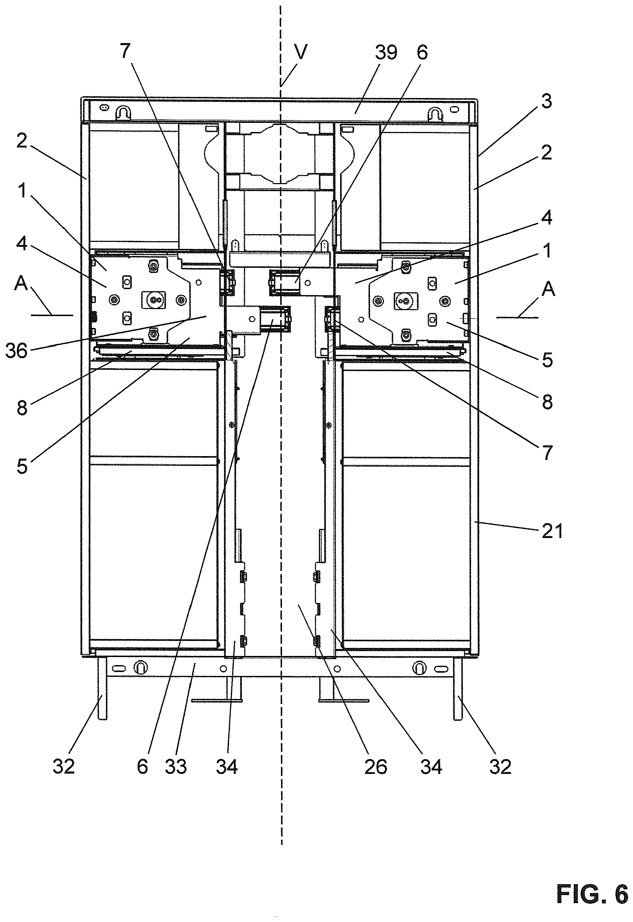

- Fig. 6: eine Ansicht des Sanitärmoduls nach Figur 1 ohne Dekorelemente mit geschlossenen Auszugselementen; und

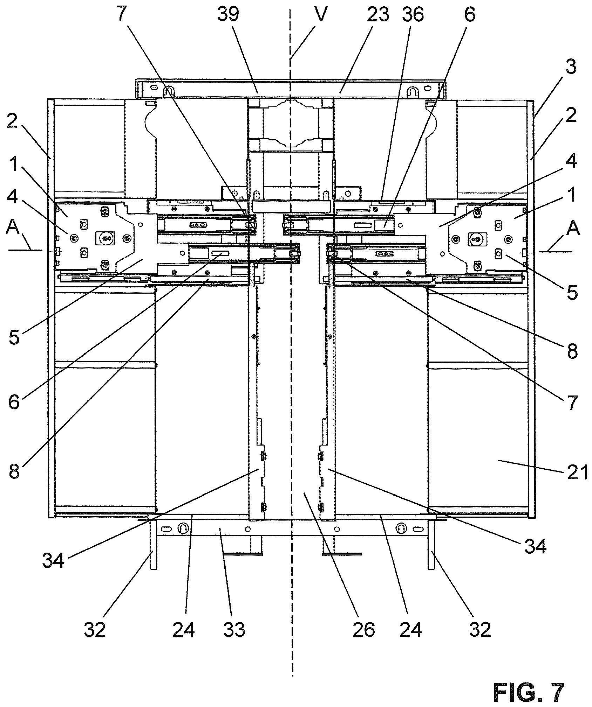

- Fig. 7: die Ansicht nach Figur 6 mit ausgezogenen Auszugselementen.

### BESCHREIBUNG BEVORZUGTER AUSFÜHRUNGSFORMEN

In der Figur 1 wird ein Sanitärmodul 21 mit zwei Auszugselementen 2 gezeigt. Die Auszugselemente 2 haben hier die Gestalt von Schubladen, welche sich seitlich aus dem Sanitärmodul 21 herausziehen lassen. In der Figur 1 sind beide Schubladen 2 in der ausgezogenen Position gezeigt. In der eingeschobenen Stellung ist die Seitenfläche 28 des Auszugselementes 2 bündig mit der Seitenfläche 29 des Sanitärmoduls 21. Es kann aber auch nur ein einziges Auszugselement 2 angeordnet werden.

Das Auszugselement 2 ist mit einer erfindungsgemässen Auszugführung 1, die in der Figur 1 mit einer Abdeckung 30 abgedeckt ist und daher nicht sichtbar ist, zum Sanitärmodul 21 gelagert. Durch die Abdeckung 30 und die Anordnung der Auszugführung 1 im Auszugselement 2 sind die technischen Details für den Benutzer nicht erkennbar, was ein besonders ästhetische Lösung bereitstellt.

Das Sanitärmodul 21 umfasst im Wesentlichen eine Trägerstruktur 3 und Dekorelemente 23, 39. Das Dekorelement 23 verdeckt die Trägerstruktur 3 frontseitig und das Dekorelement 39 verdeckt die Trägerstruktur 3 auf der Oberseite. Weiter sind auch die Seitenflächen 29 als Dekorelemente zu verstehen. Die Dekorelemente 23, 39 sind an der Trägerstruktur 3 befestigbar.

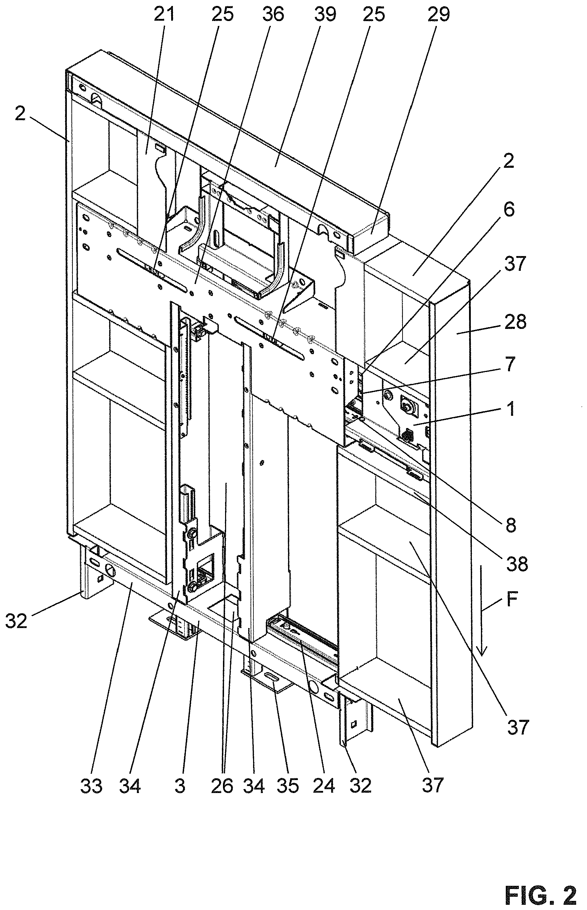

In der Figur 2 wird das Sanitärmodul 21 gemäss der Figur 1 ohne das frontseitige Dekorelement 23 gezeigt, wobei die Trägerstruktur 3 sichtbar wird. Die Trägerstruktur 3 stellt für eine Vielzahl von Elementen eine tragende Struktur bereit und wird meist im Boden eines Badezimmers aufgestellt. In der Figur 2 ist das rechte Auszugselement 2 in der Auszugsstellung gezeigt, während das linke Auszugselement 2 in der Schliessstellung gezeigt wird. Sowohl das linke, als auch das rechte Auszugselement 2, sind mit jeweils einer Auszugsführung 1 mit der Trägerstruktur 3 in Verbindung. Die Auszugführung 1 dient dabei der Lagerung des Auszugselementes 2 zur Trägerstruktur 3 und auch der Bereitstellung der entsprechenden Verschiebebewegung von der Schliessstellung in die Auszugstellung.

In einer besonders bevorzugten Ausführungsform ist die Auszugführung 1 einstellbar ausgebildet, sodass das Auszugselement 2 zur Trägerstruktur 3 beziehungsweise zum Sanitärmodul 21 ausrichtbar ist, sodass die Seitenfläche 28 bündig mit der Seitenfläche 29 ist und zudem in der gleichen Ebene zu liegen kommt.

Unter Bezugnahme auf die Figuren 3 bis 5 wird nun die Auszugführung 1 zur beweglichen Lagerung des Auszugselementes 2 in der feststehenden Trägerstruktur 3 des Sanitärmoduls 21 erläutert.

Die Auszugsführung 1 umfasst einen Führungssupport 4 und einen Montagesupport 5. Der Montagesupport 5 steht dabei mit dem Führungssupport 4 in Verbindung, wobei die Lage des Montagesupports 5 bezüglich des Führungssupports 4 ausrichtbar ist.

Der Montagesupport 5 ist mit dem Auszugselement 2 verbindbar, so wie dies untenstehend erläutert werden wird.

Der Führungssupport 4 steht mit mehreren Linearführungen 6, 7, 8 mit der Trägerstruktur 3 direkt oder indirekt über weitere Elemente in Verbindung. Am Führungssupport 4 sind eine erste vertikale Linearführung 6, eine zweite vertikale Linearführung 7 und eine horizontale Linearführung 8 angeordnet. Unter einer Linearführung, unabhängig ob vertikale Linearführung 6, 7 oder horizontale Linearführung 8, ist im vorliegenden Zusammenhang eine Führungsstruktur zu verstehen, welche die Bewegung entlang einer Längsachse bereitstellt.

Die Anordnung von zwei vertikalen Linearführungen 6, 7 und einer horizontalen Linearführung 8 hat den Vorteil, dass die auf die Auszugführung 1 wirkende Gewichtskraft des Auszugselementes 2 besonders gut aufgenommen werden kann. In der Figur 3 ist die Gewichtskraft mit dem Pfeil F gekennzeichnet. Die Gewichtskraft wirkt vom Auszugselement 1 über den Montagesupport 5 auf den Führungssupport 4 und auf die Führungen 6, 7, 8.

Die beiden vertikalen Linearführungen 6, 7 stehen dabei so in der Vertikalen, dass die Kraft F ein Biegemoment über die Höhe h der Linearführung aufbringt. Die beiden vertikalen Linearführungen 6, 7 stehen dabei so, dass diese der Kraft F, welche in der Vertikalen verläuft, ein grosses Biegewiderstandsmoment entgegensetzen. Mit anderen Worten gesagt stehen die beiden vertikalen Linearführung 6, 7 mit ihrem Querschnitt hochkant.

Die horizontale Linearführung 8 hingegen dient im Wesentlichen der Führung des Auszugselementes in der Horizontalebene, welche senkrecht zur in der Vertikalen verlaufende Kraft F steht. Bezüglich der Kraft F steht die horizontale Linearführung 8 so, dass diese der Kraft F ein kleineres Biegewiderstandsmoment entgegensetzt als die vertikalen Linearführungen 6 oder 7.

Die beiden vertikalen Linearführungen 6, 7 weisen eine unterschiedliche Länge auf. Die erste vertikale Linearführung 6 ist hier länger ausgebildet als die zweite vertikale Linearführung 7. Die zweite vertikale Linearführung 7, also die kürzere Linearführung 7 definiert mit Ihrem Wirkungsbereich den maximalen Auszug der Auszugführung 1 aus dem Sanitärmodul 21. Die Linearführung 7 definiert also zugleich den Anschlag für das Auszugselementes 2. Für die Länge der ersten vertikalen Linearführung 6 heisst dies, dass diese auch bei maximalem Auszug des Auszugselementes 2, wie in der Figur 4 dargestellt, nicht maximal ausgezogen wird. Folglich sind die Einzelteile der ersten Längsführung 6 über eine grössere Führungslänge in Kontakt und die Kraft F kann besser aufgenommen werden.

Weiter hat die Ausbildung der vertikalen Linearführungen 6, 7 den Vorteil, dass bei verbesserter Kraftaufnahme, der beschränkte Raum im Sanitärmodul 21 optimal genutzt wird, so wie dies weiter unten anhand der Fig. 6 erläutert wird.

Die beiden vertikalen Linearführungen 6, 7 liegen hier in der gleichen Ebene, können aber auch in parallel zueinander verlaufenden Ebenen angeordnet sein. Im Einbauzustand liegen diese Ebene bzw. Ebenen in der Vertikalen. Die Vertikale ist dabei so definiert, dass diese parallel zur Gewichtskraft F des Auszugselementes 2 liegt. Die Vertikalebene ist also im Wesentlichen parallel zur Schwerkraft. Die horizontale Linearführung 8 liegt dabei in der Horizontalen, welche senkrecht zur Vertikalen liegt.

Die vertikalen Linearführungen 6, 7 und die horizontale Linearführung 8 weisen in der vorliegenden Ausführungsform, abgesehen von der Einbaulage, einen im Wesentlichen gleichen Aufbau aus. Die Linearführung 6, 7, 8 umfasst zwei parallel zueinander verlaufende und relativ zueinander verschiebbare Führungsschienen 9, 10. Besonders bevorzugt ist die Führungsschiene 10 über Wälzelemente, die hier nicht dargestellt sind, in der Führungsschiene 9 gelagert. Als Wälzelemente können beispielsweise Kugelpakete vorgesehen sein. Die Führungsschiene 10 kann aufgrund der Lagerung innerhalb der Führungsschiene 9 auch als innere Führungsschiene 10 bezeichnet werden, während die Führungsschiene 9 als äussere Führungsschiene bezeichnet wird.

Die inneren Führungsschienen 10 der Linearführungen 6, 7, 8 stehen hier mit dem Führungssupport 4 in Verbindung. Beispielsweise über eine Schraubverbindung.

Die äusseren Führungsschienen 9 dienen der Verbindung der Auszugführung 1 mit dem Sanitärmodul 21, insbesondere mit der Trägerstruktur 3. Die Verbindung zur Trägerstruktur 3 kann direkt erfolgen. Hierbei werden die äusseren Führungsschienen 9 direkt mit der Trägerstruktur 3 verbunden. In einer alternativen und besonders bevorzugten Ausführungsform stehen die äusseren Führungsschienen 10 mit einer Lagerungsplatte 27 in Verbindung. Vorzugsweise werden die äusseren Führungsschienen 10 auf die Lagerplatte 27 aufgeschraubt. Die Lagerungsplatte 27 ihrerseits steht dann mit der Trägerstruktur 3 des Sanitärmoduls 21, vorzugsweise über eine Schraubverbindung, in Verbindung. Diese Ausführungsform mit der Lagerungsplatte 27 hat den Vorteil, dass das Auszugselement 2 als Einheit bereitgestellt werden kann, welche mit wenigen Handgriffen mit der Trägerstruktur 3 verbindbar ist. In der Figur 4, welche die Auszugführung in der Auszugsstellung zeigt, kann die Lagerungsplatte besonders gut erkannt werden.

Der Führungssupport 4 umfasst eine Grundplatte 11, von welcher ein Schenkel 12 rechtwinklig weg steht. In Einbaulage liegt die Grundplatte 11 parallel zur Vertikalebene und der Schenkel 12 erstreckt sich parallel zur Horizontalebene. Demnach sind an der Grundplatte 11 die beiden vertikalen Linearführungen 6, 7 angeordnet und am Schenkel 12 ist die horizontale Linearführung 8 angeordnet.

Der Montagesupport 5 umfasst eine Grundplatte 13. Von dieser Grundplatte 13 steht mindestens ein Montageschenkel 14 winklig ab. Die Montagewinkel 14 stehen dabei vorzugsweise rechtwinklig zur Grundplatte 13. In der vorliegenden Ausführungsform sind drei Montageschenkel 14 angeordnet. Zwei der Montageschenkel 14 liegen dabei parallel zur Horizontalebene und einer der Montageschenkel 14 liegt parallel zur Vertikalebene. Die Montageschenkel 14 können mit Montageöffnungen 31 versehen sein, durch welche eine Schraube zur Befestigung der Auszugsführung am Auszugselement 2 hindurchführbar ist.

Die Grundplatte 13 des Montagesupports 5 liegt flächig an der Grundplatte 11 des Führungssupportes 4 an. Die beiden Grundplatten 11 und 15 stehen fest miteinander in Verbindung. In der vorliegenden Ausführungsform wird die Verbindung über eine Schraubverbindung 20 bereitgestellt. Die Schraubverbindung 20 hat den Vorteil, dass ein Installateur die beiden Grundplatten relativ zueinander ausrichten kann, sodass das Auszugselement 2 zu Trägerstruktur 3 bzw. zum Sanitärmodul 21 ausrichtbar ist, um die Bündigkeit der Seitenflächen 28, 29 zu erreichen.

Für die Ausrichtung ist vorzugsweise mindestens ein, hier drei, Ausrichtelemente 15, 16, 17 vorhanden, über welches der Montagesupport 5 zum Führungssupport 4 ausrichtbar ist. Folglich lässt sich über das Ausrichtelement 15, 16, 17 das Auszugselement 2 zur Trägerstruktur 3 bzw. zum Sanitärmodul 21 ausrichten. Nach erfolgter Ausrichtung werden Führungssupport 4 und Montagesupport 5 über die Schraubverbindung 20 zueinander gesichert.

In der vorliegenden Ausführungsform sind drei Ausrichtelemente 15, 16, 17 angeordnet. Jedes der Ausrichtelemente 15, 16, 17 umfasst mindestens eine Ausrichtkante 18 am Montagesupport 5 und ein am Führungssupport 4 verschwenkbar gelagertes Exzenterelement 19, welches mit den Ausrichtkanten 18 in Kontakt steht. Vorzugsweise umgeben die Ausrichtkanten 18 das Exzenterelement 29 vollständig. Das Exzenterelement 19 ist hier als kreisförmige Scheibe ausgebildet, welche sich um einen ausserhalb der Mittelachse der Scheibe angeordneter Drehpunkt 40 drehen lässt. Folglich ändert die Distanz zwischen dem Drehpunkt 40 und der Ausrichtkante 18 bei einer Verschwenkung des Exzenterelementes 19. Hierbei wird der Montagesupport 5 zum Führungssupport 4 verschoben. Das Exzenterelement 19 weist eine Werkzeugöffnung 41 auf, so dass der Installateur mit einem Werkzeug die Verschwenkung bereitstellen kann.

Ein erstes Ausrichtelement 15 dient der Ausrichtung des Auszugselementes 2 in der Höhe. In der Einbaulage schiebt also das erste Ausrichtelement 15 den Montagesupport 5 bezüglich des Führungssupports 4 in der vertikalen Richtung. Dies ist mit den zwei Pfeilen im Bereich des Ausrichtelementes 15 in der Figur 4 dargestellt.

Weiter umfasst die Auszugsführung 1 ein zweites Ausrichtelement 16, mit welchem das Auszugselement 2 in der Neigung zur Horizontalen ausrichtbar ist. Das zweite Ausrichtelement 16 umfasst dabei zwei Exzenterelemente 19. Weiter lassen sich über die beiden Ausrichtelemente 16 der Montagesupport 5 zum Führungssupport 4 entlang einer Richtung in der Horizontalen verschieben.

Das dritte Ausrichtelement 17 und der Ausrichtung der Neigung zur Vertikalen, wobei das dritte Ausrichtelement 17 entweder direkt oder über eine nicht gezeigte Platte mit dem Auszugselement 1 in Verbindung steht.

Unter Bezugnahme auf die Figuren 2, 6 und 7 werden nun Einzelheiten des Sanitärmoduls 21 bzw. der Trägerstruktur 3 genauer erläutert. In der Figur 6 befinden sich die beiden Auszugselemente 2 in der eingeschobenen Position. In der Figur 7 befinden sich die beiden Auszugselemente 2 in der ausgezogenen Position.

Die Trägerstruktur 3 wird aus mehreren Profilen bereitgestellt, welche miteinander verbunden werden. Die Ausgestaltung der verschiedenen Profile kann vielfältig gelöst werden.

In der vorliegenden Ausführungsform umfasst die Trägerstruktur 3 vertikal verlaufende Stützprofile 32, welche mit einer Quertraverse 33 miteinander in Verbindung stehen. Bezüglich einer Ebene V, welche sich mittig und rechtwinklig zur Profilachse durch die Quertraverse 33 erstreckt und in Einbaurichtung in der Vertikalen liegt, sind zwei beanstandet zueinander angeordnete Vertikalprofile 34 angeordnet. Diese Vertikalprofile 34 stehen hier zudem über Stützelemente 35 mit dem Boden in Verbindung. Beanstandet zur Quertraverse 33 umfasst die Trägerstruktur 3 weiter einen Querträger 36, der mit den Vertikalprofilen 34 in Verbindung steht und beanstandet zur Quertraverse 33 liegt.

Dieser Querträger 36 ist hier im Wesentlichen als rechteckiges Hohlprofil mit einem Innenraum ausgebildet. Im Innenraum steht der Querträger 36 mit den Führungen 6, 7, 8 oder mit der Lagerungsplatte 27 der Auszugführung 1 in Verbindung. Der Querträger 36 dient der Befestigung der Auszugsführung 1 an der Trägerstruktur 3. Folglich wird das Auszugselement 2 mit der Auszugsführung 1 zur Trägerstruktur 3 verbunden. Das Auszugselement 2 ist aufgrund der Eigenschaften der Auszugsführung 1 relativ zur Trägerstruktur 3 entlang der Längsbewegung in der Horizontalen bewegbar.

Vom Querträger 36 erstrecken sich die beiden Vertikalprofile 34 weiter nach oben, wo diese dann mit einem oberen Dekorelement 39 abgedeckt sind.

Von der Figur 2 kann weiter erkannt werden, dass das Auszugselement 2 zusätzlich zur Auszugführung 1 über eine optionale Horizontalführung 24 an der Trägerstruktur gelagert ist. Die Horizontalführung 24 ist hier im Bereich der Quertraverse 33 angeordnet. Diese optionale Horizontalführung 24 hat sich als besonders vorteilhaft erwiesen, wenn das Auszugselement 2 eine verhältnismässig grosse Höhe aufweist.

Mit Bezug zu Figur 6 kann erkannt werden, dass bezüglich einer mittig durch das Sanitärmodul 21 verlaufenden Vertikalebene V zwei Auszugselemente 2 angeordnet sind. Diese Auszugselemente 2 sind entlang einer rechtwinklig zur Vertikalebene V stehenden und in der horizontalen verlaufenden Achse A bewegbar, sowie mit jeweils einer Auszugführung 1 zur Trägerstruktur 3 gelagert.

Die erste vertikale Linearführung 6 der zur Rechten angeordneten Auszugführung 1 ist dabei in der Höhe zur ersten vertikalen Linearführung der zur Linken angeordneten Auszugführung 1 versetzt. Durch diesen Versatz können die ersten vertikalen Linearführungen 6 die Vertikalebene V durchdringen. Diese Anordnung hat den besonderen Vorteil, dass die ersten vertikalen Linearführungen 6 länger gewählt werden können ohne dass die Breite des Sanitärmoduls 21 hätte vergrössert werden müssen. Wie oben bereits erwähnt werden die ersten vertikalen Linearführungen 6 nicht auf die volle Länge ausgezogen. Somit lässt sich bei gleichbleibender Kompaktheit aufgrund der grösseren Führungslänge der vertikalen Linearführung das Auszugselement 1 mit einer grösseren Kraft beladen.

Das Auszugselement 2 hat in der vorliegenden Ausführungsform gemäss den Figuren 2, 6 und 7 die Gestalt einer Auszugschublade mit drei Tablaren 37, welche für den Benutzer benutzbar sind. Ein viertes Tablar 38 ist vorgesehen, wobei oberhalb dieses Tablars 38 die Auszugsführung 1 angeordnet ist. Von der Figur 1 kann gut erkannt werden, dass diese Auszugführung 1 durch eine Abdeckung 30 abgedeckt ist, sodass der Benutzer diese nicht erkennen kann. Die Abdeckung 30 wird nach der Einstellung des Auszugelementes 2 bezüglich des Sanitärmoduls 21 über die Ausrichtelemente 16, 17, 15 angebracht und kann im Wartungsfall wieder entfernt werden.

Die Trägerstruktur 3 weist weiter Befestigungsstellen 25 zur Befestigung des Sanitärartikels am Sanitärmodul 21 bzw. an der Trägerstruktur 3 auf. Die Befestigungsstellen 25 können beispielsweise Gewindeöffnungen sein. Besonders vorteilhaft sind die Gewindeöffnung Teil eines separaten mit der Trägerstruktur bewegbarem Element. Mittels zu dem Befestigungsstellen 25 passenden Befestigungsmitteln kann also der Sanitärartikel am Sanitärmodul 21 befestigt werden.

Weiter weist die Trägerstruktur 3 Durchbrüche oder Kanäle 26 zur Durchführung von Rohrleitungen zum Anschluss an die Sanitärarmatur auf. Durch diese Durchbrüche oder Kanäle 26 werden die Rohrleitungen an die entsprechende Stelle am Sanitärmodul 21 geführt. Weiter weisen die Dekorelemente, hier das frontseitige Dekorelement 23, Durchbrüche 22 auf, durch welche entsprechende Rohrleitungen aus der Trägerstruktur 3 durch das Dekorelement 23 zum Sanitärartikel zuführbar sind. Die Druchbrüche 22 dienen auch der Zuführung zur oben beschriebenen Sanitärmatur.

Besonders bevorzugt umfasst das Sanitärmodul 21 zusätzlich ein push-to-open Modul, welches bei einem Druck auf die geschlossenen Auszugselemente 2, dieselben öffnet. Dieses Modul kann separat vorgesehen sein oder aber ein integraler Bestandteil der Linearführung sein.

**BEZUGSZEICHENLISTE**

| | | | |
|---|---|---|---|
| 1 | Auszugführung | 24 | Horizontalführung |
| 2 | Auszugselement | 25 | Befestigungsstellen |
| 3 | Trägerstruktur | 26 | Durchbrüche |
| 4 | Führungssupport | 27 | Lagerungsplatte |
| 5 | Montagesupport | 28 | Seitenfläche |
| 6 | erste vertikale Linearführung | 29 | Seitenfläche |
| 7 | zweite vertikale Linearführung | 30 | Abdeckung |
| 8 | horizontale Linearführung | 31 | Montageöffnung |
| 9 | innere Führungsschiene | 32 | Stützprofile |
| 10 | äussere Führungsschiene | 33 | Quertraverse |
| 11 | Grundplatte | 34 | Vertikalprofile |
| 12 | Schenkel | 35 | Stützelemente |
| 13 | Grundplatte | 36 | Querträger |
| 14 | Montageschenkel | 37 | Tablar |
| 15 | Ausrichtelement | 38 | Tablar |
| 16 | Ausrichtelement | 39 | Dekorelement |
| 17 | Ausrichtelement | 40 | Drehpunkt |
| 18 | Ausrichtkante | 41 | Werkzeugöffnung |
| 19 | Excenterelement | 42 | Schenkel |
| 20 | Schraubverbindung | V | Vertikale |
| 21 | Sanitärmodul | H | Horizontale |
| 22 | Durchbrüche | | |
| 23 | Dekorelement | | |

## Patentansprüche

1. Auszugführung (1) zur beweglichen Lagerung eines Auszugselementes (2) entlang einer Längsrichtung in einer feststehenden Trägerstruktur (3) eines Sanitärmoduls (21), umfassend
ein Führungssupport (4), der mit der Trägerstruktur (3) verbindbar ist, und
ein Montagesupport (5), der mit dem Führungssupport (4) bezüglich des Führungsupports (4) ausrichtbar in Verbindung steht, wobei der Montagesupport (5) mit dem Auszugselement (2) verbindbar ist, wobei
der Führungssupport (4) eine erste vertikale Linearführung (6), eine zweite vertikale Linearführung (7) und eine horizontale Linearführung (8) umfasst, über welche Linearführungen (6, 7, 8) die Auszugführung (1) an der Trägerstruktur (3) befestigbar ist, **dadurch gekennzeichnet,**
**dass** die erste vertikale Linearführung (6) länger als die zweite vertikale Linearführung (7) ist.

2. Auszugführung (1) nach einem der vorhergehenden Ansprüche, **dadurch gekennzeichnet, dass** die beiden vertikalen Linearführungen (6, 7) in der gleichen Ebene oder in parallelen Ebenen liegen, wobei diese Ebene bzw. Ebenen im Einbauzustand in der Vertikalen liegt und dass die horizontale Linearführung (8) in einer rechtwinklig zur besagten Ebene mit der vertikalen Linearführungen (6, 7) stehenden Ebene liegt, wobei letzter im Einbauzustand der Horizontalen entspricht.

3. Auszugführung (1) nach einem der vorhergehenden Ansprüche, **dadurch gekennzeichnet, dass** die vertikalen Linearführungen (6, 7) und die horizontale Linearführung (8) die Form von Längsführungen mit mindestens zwei Führungsschienen (9, 10), die über Wälzelemente, wie Kugelpakete, bewegbar zueinander angeordnet sind, aufweisen, wobei jeweils eine der Führungsschienen (9, 10) mit der Trägerstruktur (3) verbindbar ist und wobei jeweils die andere der Führungsschienen (9, 10) mit dem Führungssupport (4) in Verbindung steht.

4. Auszugführung (1) nach einem der vorhergehenden Ansprüche, **dadurch gekennzeichnet, dass** der Führungssupport (4) eine Grundplatte (11) umfasst, von welcher ein Schenkel (12) rechtwinklig weg steht, wobei an der Grundplatte (11) die beiden vertikalen Linearführungen (6, 7) angeordnet sind, und wobei am Schenkel (12) die Horizontalführung (8) angeordnet ist, wobei die Grundplatte (11) in Einbaulage in der Vertikalen liegt und wobei der Schenkel (12) in Einbaulage in der Horizontalen liegt.

5. Auszugführung nach einem der vorhergehenden Ansprüche, **dadurch gekennzeichnet, dass** der Montagesupport (5) eine Grundplatte (13) umfasst, von welcher mindestens ein Montageschenkel (14) winklig, vorzugsweise rechtwinklig, absteht, wobei die Grundplatte (15) flächig an der Grundplatte (11) des Führungssupports (4) anliegt und vorzugsweise über eine Schraubverbindung (20) mit dem Führungssupport (4) in Verbindung steht.

6. Auszugführung nach einem der vorhergehenden Ansprüche, **dadurch gekennzeichnet, dass** der Montagesupport (5) zum Führungssupport (4) in seiner Lage über mindestens ein Ausrichtelement (15, 16, 17) ausrichtbar ist.

7. Auszugführung nach Anspruch 6, **dadurch gekennzeichnet, dass** das Ausrichtelement (15, 16, 17) mindestens eine Ausrichtkante (18) am Montagesupport (5) und ein am Führungssupport (4) verschwenkbar gelagertes Exzenterelement (19) umfasst, wobei das Exzenterelement (19) mit den Ausrichtkanten (18) in Kontakt steht und eine Ausrichtbewegung auf den Montagesupport (5) ausübt.

8. Auszugführung nach einem der Ansprüche 6 oder 7, **dadurch gekennzeichnet, dass** mindestens ein Ausrichtelement (15) für die Ausrichtung in der Höhe, dass mindestens ein Ausrichtelement (16) für die Ausrichtung in der Neigung und Position zur Horizontalen und dass mindestens ein Ausrichtelement (17) zur Ausrichtung in der Neigung zur Vertikalen angeordnet ist.

9. Auszugführung nach einem der vorhergehenden Ansprüche, **dadurch gekennzeichnet, dass** die erste vertikale Linearführung (6), die zweite vertikale Linearführung (7) und die horizontale Linearführung (8) mit einem Lagerungselement (27), vorzugsweise in der Gestalt einer Lagerungsplatte (27) mit angeformten und winklig von der Lagerungsplatte (27) abstehenden Schenkel (42), miteinander in Verbindung stehen, wobei die Auszugführung über die Lagerungsplatte (27) mit der Trägerstruktur (3) verbindbar ist.

10. Sanitärmodul (21), insbesondere für die Befestigung eines Sanitärartikels, umfassend eine aus Profilen (32-36) bereitgestellte Trägerstruktur (3) und flächige mit den Profilen (32-36) in Verbindung stehende Dekorelemente (23), welche die Trägerstruktur (3) mindestens frontseitig und oberseitig überdecken, wobei das Sanitärmodul (21) weiterhin mindestens ein Auszugselement (2) umfasst, welches mit einer Auszugführung (1) nach einem der vorhergehenden Ansprüche mit der Trägerstruktur (3) in Verbindung steht und relativ zur Trägerstruktur (3) verschiebbar ist.

11. Sanitärmodul (21) nach Anspruch 10, **dadurch gekennzeichnet, dass** der Führungssupport (4) über die vertikalen Linearführungen (6) und die horizontale Linearführung (8) an der Trägerstruktur (3) direkt oder indirekt befestigt ist und das Auszugselement (2) mit dem Montagesupport (5) an der Auszugführung (1) gelagert ist.

12. Sanitärmodul (21) nach einem der Ansprüche 10 bis 11, **dadurch gekennzeichnet, dass** das Auszugselement (2) zusätzlich zur Auszugführung (1) über eine weitere horizontale Führung (24) zur Trägerstruktur (3) gelagert ist, wobei die beiden horizontalen Führungen (8, 24) in der Horizontalen beabstandet zueinander sind.

13. Sanitärmodul (21) nach einem der Ansprüche 10 bis 12, **dadurch gekennzeichnet, dass** bezüglich einer mittig durch das Sanitärmodul (21) verlaufenden Vertikalebene (V) zwei Auszugselemente (2) angeordnet sind, welche entlang einer rechtwinklig zur Vertikalebene (V) stehenden und in der Horizontalen verlaufenden Achse (A) bewegbar sind, wobei jeweils die ersten vertikalen Linearführungen (6) der Auszugführungen (1) in der Höhe zueinander versetzt sind und die Vertikalebene (V) durchdringen.

14. Sanitärmodul (21) nach einem der vorhergehenden Ansprüche 10 bis 13, **dadurch gekennzeichnet, dass** die Trägerstruktur (3) weiter Befestigungsstellen (25) zur Befestigung des Sanitärartikels am Sanitärmodul (21) mittels zu den Befestigungsstellen (25) passenden Befestigungsmitteln aufweist und/oder dass die Trägerstruktur (3) Durchbrüche oder Kanäle (26) zur Durchführung von Rohrleitungen zum Anschluss an die Sanitärarmatur aufweist, wobei die Dekorelemente (23) Durchbrüche (22) zur Durchführung der Befestigungsmittel oder der Rohrleitungen aufweisen bzw. bereitstellen.

## Claims

1. Slider (1) for the movable mounting of a sliding element (2) along a longitudinal direction in a stationary support structure (3) of a sanitary module (21), comprising
a guide support (4), which is connectable to the support structure (3), and
an assembly support (5), which is connected to the guide support (4) such that it is alignable in relation to the guide support (4), the assembly support (5) being connectable to the sliding element (2), wherein the guide support (4) comprises a first vertical linear guide (6), a second vertical linear guide (7) and a horizontal linear guide (8), via which linear guides (6, 7, 8) the slider (1) is fastenable on the support structure (3), **characterized in that** the first vertical linear guide (6) is longer than the second vertical linear guide (7).

2. Slider (1) according to one of the preceding claims, **characterized in that** the two vertical linear guides (6, 7) lie in the same plane or in parallel planes, this plane or these planes in the installed state lying in the vertical line and **in that** the horizontal linear guide (8) lies in a plane which is perpendicular to said plane having the vertical linear guides (6, 7), the latter in the installed state corresponding to the horizontal line.

3. Slider (1) according to one of the preceding claims, **characterized in that** the vertical linear guides (6, 7) and the horizontal linear guide (8) have the form of longitudinal guides having at least two guide rails (9, 10) which are located movably in relation to one another via anti-friction elements, such as ball packets, one of the guide rails (9, 10) in each case being connectable to the support structure (3) and the other of the guide rails (9, 10) in each case being connected to the guide support (4).

4. Slider (1) according to one of the preceding claims, **characterized in that** the guide support (4) comprises a base plate (11), from which a leg (12) projects perpendicularly, the two vertical linear guides (6, 7) being located on the base plate (11), and the horizontal guide (8) being located on the leg (12), the base plate (11) in the installed position lying in the vertical line and the leg (12) in the installed position lying in the horizontal line.

5. Slider according to one of the preceding claims, **characterized in that** the assembly support (5) comprises a base plate (13), from which at least one assembly leg (14) projects angularly, preferably perpendicularly, the base plate (13) lying flat against the base plate (11) of the guide support (4) and preferably being connected to the guide support (4) via a screw connection (20).

6. Slider according to one of the preceding claims, **characterized in that** the assembly support (5) is alignable in its position in relation to the guide support (4) via at least one alignment element (15, 16, 17).

7. Slider according to Claim 6, **characterized in that** the alignment element (15, 16, 17) comprises at least one alignment edge (18) on the assembly support (5) and an eccentric element (19), which is pivotably mounted on the guide support (4), the eccentric element (19) being in contact with the alignment edges (18) and exerting an alignment movement on the assembly support (5).

8. Slider according to either of Claims 6 or 7, **characterized in that** at least one alignment element (15) is located for the alignment of the height, **in that** at least one alignment element (16) is located for the alignment of the inclination and position in relation to the horizontal line, and **in that** at least one alignment element (17) is located for the alignment of the inclination in relation to the vertical line.

9. Slider according to one of the preceding claims, **characterized in that** the first vertical linear guide (6), the second vertical linear guide (7) and the horizontal linear guide (8) are connected to one another by a mounting element (27), preferably in the form of a mounting plate (27) having legs (42) which are formed on and project angularly from the mounting plate (27), the slider being connectable to the support structure (3) via the mounting plate (27).

10. Sanitary module (21), in particular for the fastening of a sanitary article, comprising a support structure (3) made of profiles (32-36) and décor elements (23), which are two-dimensional and connected to the profiles (32-36) and which cover the support structure (3) at least on the front side and the upper side, the sanitary module (21) further comprising at least one sliding element (2), which by a slider (1) according to one of the preceding claims is connected to the support structure (3) and is displaceable in relation to the support structure (3).

11. Sanitary module (21) according to Claim 10, **characterized in that** the guide support (4) is directly or indirectly fastened on the support structure (3) via the vertical linear guides (6) and the horizontal linear guide (8), and the sliding element (2) is mounted by the assembly support (5) on the slider (1).

12. Sanitary module (21) according to either of Claims 10 and 11, **characterized in that** the sliding element (2), in addition to the slider (1), is mounted via a further horizontal guide (24) in relation to the support structure (3), the two horizontal guides (8, 24) being spaced apart from one another in the horizontal line.

13. Sanitary module (21) according to one of Claims 10 to 12, **characterized in that** two sliding elements (2) are located in relation to a vertical plane (V) extending centrally through the sanitary module (21), said sliding elements (2) being movable along an axis (A) which is perpendicular to the vertical plane (V) and extends in the horizontal line, the first vertical linear guides (6) of the sliders (1) in each case being offset in relation to one another in height and penetrating the vertical plane (V).

14. Sanitary module (21) according to one of the preceding Claims 10 to 13, **characterized in that** the support structure (3) further has fastening points (25) for the fastening of the sanitary article on the sanitary module (21) by means of fastening means which match the fastening points (25) and/or **in that** the support structure (3) has breakouts or ducts (26) for the lead-through of pipelines for the connection to the sanitary fitting, the decor elements (23) having or providing breakouts (22) for the lead-through of the fastening means or the pipelines.

## Revendications

1. Guide d'extension (1) pour le montage mobile d'un élément d'extension (2) le long d'une direction longitudinale dans une structure de support fixe (3) d'un module sanitaire (21), comprenant
un support de guidage (4) pouvant être connecté à la structure de support (3), et
un support de montage (5) qui est relié au support de guidage (4) de manière orientable par rapport au support de guidage (4), où le support de montage (5) peut être relié à l'élément d'extension (2), où
le support de guidage (4) comprend un premier guide linéaire vertical (6), un second guide linéaire vertical (7) et un guide linéaire horizontal (8), par l'intermédiaire desquels guides linéaires (6, 7, 8) le guide d'extension (1) peut être fixé à la structure de support (3), **caractérisé en ce que**
le premier guide linéaire vertical (6) est plus long que le second guide linéaire vertical (7).

2. Guide d'extension (1) selon une des revendications précédentes, **caractérisé en ce que** les deux guides linéaires verticaux (6,7) se situent dans le même plan ou dans des plans parallèles, où dans un état installé, ce plan se situe respectivement ces plans se situent dans la verticale, et que le guide linéaire horizontal (8) se situe dans un plan perpendiculaire au dit plan avec les guides linéaires verticaux (6,7), où ce dernier correspond à l'horizontale dans un état de montage.

3. Guide d'extension (1) selon une des revendications précédentes, **caractérisé en ce que** les guides linéaires verticaux (6,7) et le guide linéaire horizontal (8) présentent une forme de guides longitudinaux ayant au moins deux rails de guidage (9,10), qui sont disposés de manière mobile les uns par rapport aux autres à travers des éléments roulants, telle que des paquets à billes, où respectivement un des rails de guidage (9,10) peut être relié à la structure de support (3) et où respectivement l'autre rail de guidage (9,10) est relié au support de guidage (4).

4. Guide d'extension (1) selon une des revendication précédentes, **caractérisé en ce que** le support de guidage (4) comporte une plaque de base (11), à partir de laquelle une branche (12) fait saillie de manière perpendiculaire, où les deux guides linéaires verticaux (6, 7) sont disposés au niveau de la plaque de base (11), et où le guide horizontal (8) est disposé au niveau la branche (12), où la plaque de base (11) se situe dans la verticale dans la position installée et où la branche (12) se situe dans l'horizontale dans la position installée.

5. Guide d'extension selon une des revendications précédentes, **caractérisé en ce que** le support de montage (5) comprend une plaque de base (13), à partir de laquelle au moins une branche de montage (14) fait saillie de manière angulaire, préférablement dans un angle droit, où la plaque de base (15) est accolée à la plaque de base (11) du support de guidage (4) et est préférablement en liaison avec le support de guidage (4) à travers une liaison à vis (20).

6. Guide d'extension selon une des revendications précédentes, **caractérisé en ce que** le support de montage (5) peut être orienté par rapport au support de guidage (4) dans sa position à travers au moins un élément d'orientation (15, 16, 17)

7. Guide d'extension selon la revendication 6, **caractérisé en ce que** l'élément d'orientation (15, 16, 17) comprend au moins un bord d'orientation (18) au niveau du support de montage (5) et un élément excentrique (19) monté de manière pivotable au niveau du support de guidage (4), où l'élément excentrique (19) est en contact avec les bords d'orientations (18) et effectue un mouvement d'orientation sur le support de montage (5).

8. Guide d'extension selon une des revendications 6 ou 7, **caractérisé en ce que** au moins un élément d'orientation (15) pour l'orientation en hauteur, au moins un élément d'orientation (16) pour l'orientation en inclinaison et la position par rapport à l'horizontale et au moins un élément d'orientation (17) pour l'orientation dans l'inclinaison par rapport à la verticale sont prévus.

9. Guide d'extension selon une des revendications précédentes, **caractérisé en ce que** le premier guide linéaire vertical (6), le second guide linéaire vertical (7) et le guide linéaire horizontal (8) sont en liaison les uns avec les autres avec un élément de montage (27), préférablement sous forme d'une plaque de montage (27) avec une branche (42) faisant saillie de manière angulaire à partir de la plaque de montage (27) et formée sur celle-ci, où le guide d'extension peut être relié avec la structure de support (3) à travers la plaque de montage (27).

10. Module sanitaire (21), en particulier pour la fixation d'un article sanitaire, comprenant une structure de support (3) mise à disposition par des profilés (32-36) et des éléments de décor (23) plats étant reliés avec les profilés (32-36), lesquels recouvrent la structure de support (3) au moins du coté frontal et du coté supérieur, où le module sanitaire (21) comprend en outre au moins un élément d'extension (2), lequel est en liaison par le biais d'un guide d'extension (1) selon une des revendications précédentes avec la structure de support (3)., ayant une structure du support (3) et peut être coulissé par rapport à la structure de support (3).

11. Module sanitaire (21) selon la revendication 10, **caractérisé en ce que** le support de guidage (4) est fixé de manière directe ou indirecte à travers les guides linéaires verticaux (6) et le guide linéaire horizontal (8) sur la structure de support (3) et que l'élément d'extension (2) est monté sur le guide d'extension (1) par l'intermédiaire du support de montage (5).

12. Module sanitaire (21) selon une des revendications 10 et 11, **caractérisé en ce que** l'élément d'extension (2), supplémentairement au guide d'extension (1), est monté à travers un guide horizontal supplémentaire (24) par rapport à la structure de support (3), où les deux guides horizontaux (8, 24) sont espacés en direction horizontale l'un par rapport à l'autre.

13. Module sanitaire (21) selon une des revendications 10 à 12, **caractérisé en ce que** deux éléments d'extension sont disposés par rapport à un plan vertical (V) s'étendant de manière centrale à travers le module sanitaire (21), lesquels sont déplaçables le long d'un axe (A) perpendiculaire au plan vertical (V) et s'étendant dans l'horizontale, où respectivement les premiers guides linéaire verticaux (6) des guides d'extension (1) sont décalés en hauteur l'un par rapport à l'autre et pénètrent le plan vertical (V).

14. Module sanitaire (21) selon une des revendications 10 à 13, **caractérisé en ce que** la structure du support (3) présente en outre des points de fixation (25) pour la fixation de l'article sanitaire sur le module sanitaire (21) au moyen de moyens de fixation assortis aux points de fixation (25) et/ou que la structure du support (3) présente des percées ou des canaux (26) pour faire passer des conduites de tuyau pour une connexion à une garniture sanitaire, où les éléments de décor (23) présentent respectivement mettent à disposition des percées (22) pour faire passer les moyens de fixation ou des conduites de tuyau.
